Europäisches Patentamt

European Patent Office

Office européen des brevets

(11) Publication number: **0 464 954 A2**

# EUROPEAN PATENT APPLICATION

(21) Application number: **91201729.0**

(22) Date of filing: **03.07.91**

(51) Int. Cl.⁵: **A01G 9/10**

(30) Priority: **06.07.90 US 549454**

(43) Date of publication of application:
**08.01.92 Bulletin 92/02**

(84) Designated Contracting States:
**AT BE CH DE DK ES FR GB GR IT LI LU NL SE**

(71) Applicant: **Simon, Edward John**
**1015A Greenwood Road**
**Elk, California 95432(US)**

(72) Inventor: **Simon, Edward John**
**1015A Greenwood Road**
**Elk, California 95432(US)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) **Apparatus for transplant propagation.**

(57) The invention concerns a tray for holding a plurality of plant plugs comprising a lower tray member and an upper tray member carried on said lower tray member and cooperatively forming a regular array of transplant plug cells, said upper tray member being removable from said lower tray member to carry transplant plugs out of said array of cells.

According to a preferred embodiment said lower tray member comprises a transplant propagation tray itself defining a rectangular array of transplant plug cells, and the upper tray member comprises a plurality of separate parallel channels each having substantially vertical side wall sections and joining bottom wall sections with openings in the side and bottom wall sections adapted to allow the upper tray member to nest in the lower tray member and form portions of the side and bottom walls of the transplant plug cells. In this tray the plant plugs can easily be removed.

FIG.3

This invention relates generally to apparatus for propagation of transplants or seedlings in multicell trays.

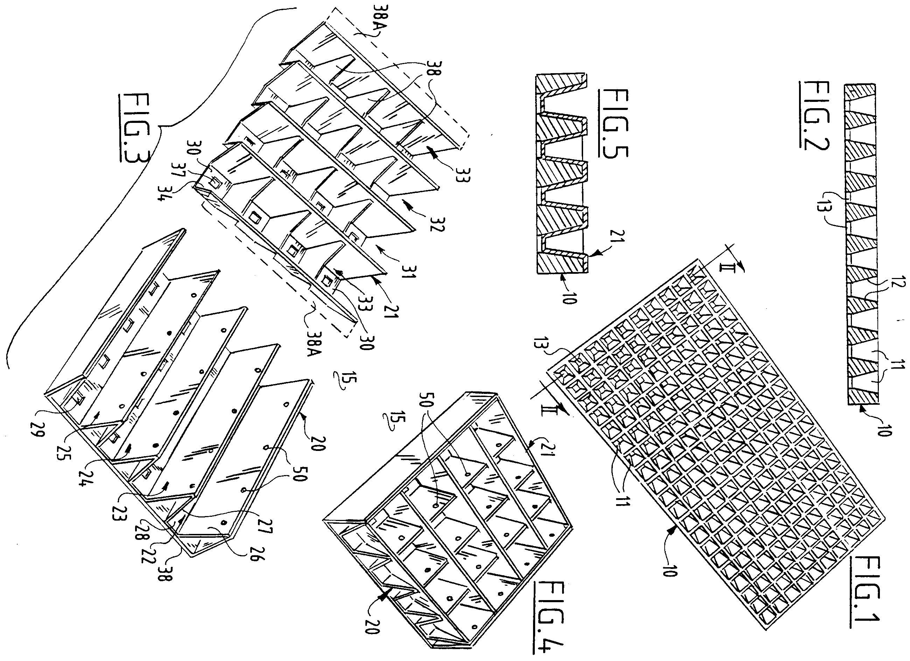

The state of the art in seedling or transplant propagation involves the use of a large tray having a rectangular array of individual cells for containing a transplant medium into which individual seeds or root cuttings are placed and grown under greenhouse conditions. Currently this large tray most often comprises a molded styrofoam plastic tray such as is illustrated in Figs. 1 and 2 of the drawings.

Several disadvantages are involved in the use of the prior art tray and many of the other types of trays that have been proposed.

The trays typically do not last more than several growing seasons over a two or three year period. Toward the end of their useful life, these prior art trays tend to deteriorate with the surfaces of the cell walls getting rougher and making it more difficult to remove the transplant plug from the tray.

The trays are bulky and thus difficult and costly to ship from the nursery to the planting location. Cleaning of the trays after use can be difficult since the side walls of the small individual cells are not readily accessible to brushing. Storage of the bulky trays when not in use consumes a lot of space.

Disposal of the styrofoam plastic trays may create environmental problems. Another disadvantage is that it is difficult to remove the plugs from the tray.

Accordingly, one of the objects of this invention is to provide a transplant propagation tray that provides ease of removal of transplant plugs from the tray.

One aspect of this invention features tray for holding a plurality of plant plugs comprising a lower tray member and an upper tray member carried on said lower tray member and cooperatively forming a regular array of transplant plug cells, said upper tray member being removable from said lower tray member to carry transplant plugs out of said array of cells.

In one embodiment the lower tray member comprises a transplant propagation tray itself defining a rectangular array of transplant plug cells, and the upper tray member comprises a plurality of separate parallel channels each having substantially vertical side wall sections and joining bottom wall sections with openings in the side and bottom wall sections adapted to allow the upper tray member to nest in the lower tray member and form portions of the side and bottom walls of the transplant plug cells.

Thus the upper tray member of this invention can be formed to work cooperatively with a prior art tray and facilitate removal of transplant plugs therefrom. It can serve to extend the life of such trays after they have begun to degrade to the point that they would otherwise be candidates for disposal.

In a preferred embodiment, the upper and lower tray members each comprises a plurality of parallel channels with each channel formed by a pair of opposite, substantially vertical side wall sections and a bottom wall section joining lower edges of the substantially vertical side wall sections, adjacent substantially vertical side wall sections of the tray members are joined together and form a substantially structural element; said channels in said lower and upper tray members bein positioned transverse to each other when assembled together; said channels in the lower tray member being substantially continuous from end to end thereof; said substantially vertical side wall sections and bottom wall sections and said bottom wall section of said upper tray member being discontinuous from end to end and defining openings corresponding in geometrical shape to said structural element formed by substantially vertical side wall sections of said lower tray member such that said upper tray member nests on said lower tray member and sections of said substantially vertical side walls of each of said upper and lower tray members form the complete side walls of said array of plug cells.

The bottom wall section of the upper tray member may be positioned substantially adjacent to the bottom wall section of the lower tray when the tray members are assembled together and both of the bottom wall sections may have apertures defined therein at cooperative locations to form a drainage aperture in the bottom of each of the plug cells.

According to another embodiment the bottom wall section of the upper tray member is positioned to such a distance from the bottom wall section of the lower tray member when said tray members are assembled together, and wherein a drainage opening has been provided in the bottom wall section of the upper tray member.

Another embodiment of this features a lower tray member in which a plurality of water transmission channels are formed between adjacent vertical side walls and extend from one end of the lower tray member to the other end thereof.

Another aspect of this invention features transplant propagation and planting apparatus comprising plurality of transplant propagation trays. The upper tray member is removable from said lower tray member to carry transplant plugs out of said array of cells. This embodiment further includes a tray conveyor module, including a tray conveyor for receiving a sequence of said upper tray members carrying mature transplant plugs and carrying each of said upper tray members to a plug transfer station. A plug removal means is provided for removing said transplant plugs from said upper tray member one row at a time at the plug transfer station. A plug transfer module is positioned at said plug transfer station and is adapted to receive each row of transplant plugs at a plug transfer location and to carry each of said transplant plugs to a plug delivery location, said plug delivery location being readily interfaced to a plug planting module of an automatic transplanting machine.

From the above features it will be apparent that the transplant propagation tray of this invention provides many advantages over prior art trays. The tray members of this invention can alternatively be made from inexpensive materials for one time use and disposal or from more rugged materials to last many years more than the prior art trays. The upper tray member, being removable from the lower tray member, facilitates both the removal of transplant plugs and the carrying of the plugs to the location of final use. Thereafter, depending on the form of the transplant propagation tray, this upper tray member may be easily and inexpensively shipped back to the nursery by nesting it with other members and placing them in a shipping container. Both nesting and non-nesting versions of the upper tray member are disclosed herein.

The transplant propagation apparatus of this invention can readily be adapted to use with the mechanized operations of large scale growers and can also be adapted to use in small greenhouse and home transplant propagation operations.

Figs. 1 and 2 illustrate prior art propagation trays, with Fig. 2 being a section view taken along the lines 2-2 in Fig. 1.

Fig. 3 is a perspective view of one embodiment of upper and lower tray members forming, when assembled, an overall transplant propagation tray in accordance with this invention.

Fig. 4 is a perspective view of a transplant propagation tray in accordance with this invention.

Fig. 5 is a section view illustration an alternative embodiment of transplant propagation apparatus in accordance with this invention.

Figs. 6 and 7 illustrate another embodiment of transplant propagation apparatus in accordance with this invention and having a built in plug heating feature, with Fig. 7 being a schematic section view taken along the lines 7-7 in Fig. 6.

Fig. 8 illustrates another embodiment of this invention adapted for large scale commercial transplant propagation systems.

Figs. 9 and 10 illustrate a transplant propagation and planting system which interfaces the transplant plug tray of this invention with automatic transplanting machinery.

Figs. 11 and 12 are top views of an upper tray member and a lower tray member, respectively, according to an alternative embodiment of transplant propagation apparatus in accordance with this invention.

Fig. 13 is a top view of an assembled transplant propagation tray formed by assembling the upper and lower tray members depicted in Figs. 10 and 11.

Fig. 14 shows another embodiment of an apparatus for removing the plugs from the tray.

Fig. 15 shows a further embodiment of a lower tray member according to this invention.

Referring now to Figs. 3 and 4, it will be seen that transplant propagation apparatus 15 comprises a lower tray member 20 and an upper tray member 21 which, when assembled together, cooperatively form a rectangular array of transplant plug cells as shown in Fig. 4. The four by four array shown in these figures is used for purposes of example only, and it will be appreciated that the tray members 20 and 21 can be formed to provide as large or small an array of cells as desired. The size and shape of the individual cells can be varied as well so that the invention is readily adapted to use for propagating small seedlings for flowers or fruits and vegetables or larger seedlings for trees to be used in reforestation projects. Various manufacturing methods and materials are discussed below.

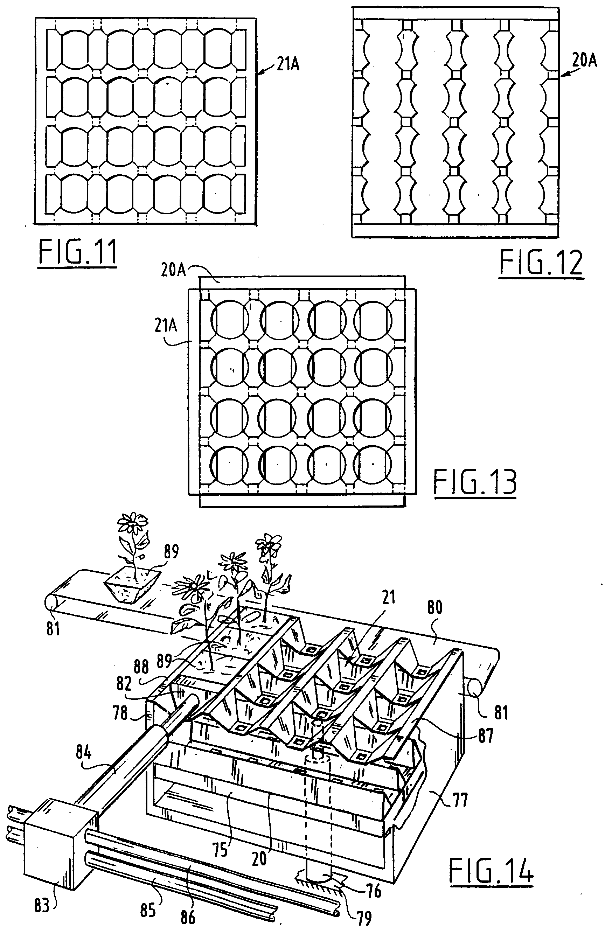

Figs. 3-7 illustrate an embodiment of the invention in the form of an array of rectangular (special case being square) cells with sloping vertical side walls. Figs. 11 and 12 illustrate an alternative embodiment in the form of an array of cells with circular cross sections and
straight vertical side walls. It should be apparent that other regular geometric shapes for the cross section of the cells, such as a hexagon, could also be used if desired. Tray members with sloping vertical wall configurations will stack together in a nesting manner, while tray members with straight vertical side walls will not stack in a nesting fashion.

Lower tray member 20 comprises a plurality of channels 22-25, each of which is formed from sloping vertical side walls 26, 27 and a bottom wall 28 joining the lower edges of the side walls. The tops of adjacent side walls are joined and form a triangular shaped structural element between channels. Apertures 29 which may be any geometric shape such as square or round are formed in bottom walls 28 of each channel in positions which substantially align with corresponding apertures 37 in the channels of the upper tray member 21.

Upper tray member 21 comprises a plurality of channels 30-33 which are discontinuous due to the triangular openings 38 formed in sloping vertical side walls 35, 35. Bottom wall sections 36 are also discontinuous and this arrangement provides for upper tray member 21 to nest in lower tray member 20 to form the overall multicell tray 15 shown in Fig. 4.

Upper tray member 21 may be formed with a pair of end flanges 38A thereon to assist in gripping this member for separating it from the lower tray member 20 after transplant plugs grown therein have matured. If desired, buttresses of other structural elements could be formed between the adjacent sloping wall sections to provide more structural rigidity to this member.

It will be appreciated that propagation tray 15 can be made to have essentially the same overall shape and configuration of the speedling tray shown in Fig. 1. After tray 15 is assembled, dirt may be dispensed into the individual cells and each cell may be seeded by hand or machine. After the seedlings have grown to the desired size, removal of the individual plugs for transplanting is facilitated by either lifting or sliding upper tray member 21 out of lower tray member 20. The array of plugs carried on the upper tray member may then be placed in an inexpensive disposable box for shipping to the final planting site. After transplanting is completed, the upper tray member 21 can be nested with other similar upper tray members for convenient return shipping to the nursery, if constructed of durable material for long term use. Otherwise, if made from inexpensive materials, they may be nested together for transporting to a disposal site or a plastic reprocessing location.

Fig. 5 illustrates another embodiment of this invention in which upper tray member 21 is formed to conform with the cell size and distribution of a speedling type tray 10 which forms the lower tray member of the overall combination propagation tray. With upper tray member 21 used as a nestable insert, removal of the transplant plugs is facilitated. In addition, the useful life of the tray 10 may be extended by this combination since upper tray member 21 would enable use of trays 10 which otherwise have degraded, such as having cell walls deteriorated to the point of making plug removal difficult without breaking the root ball.

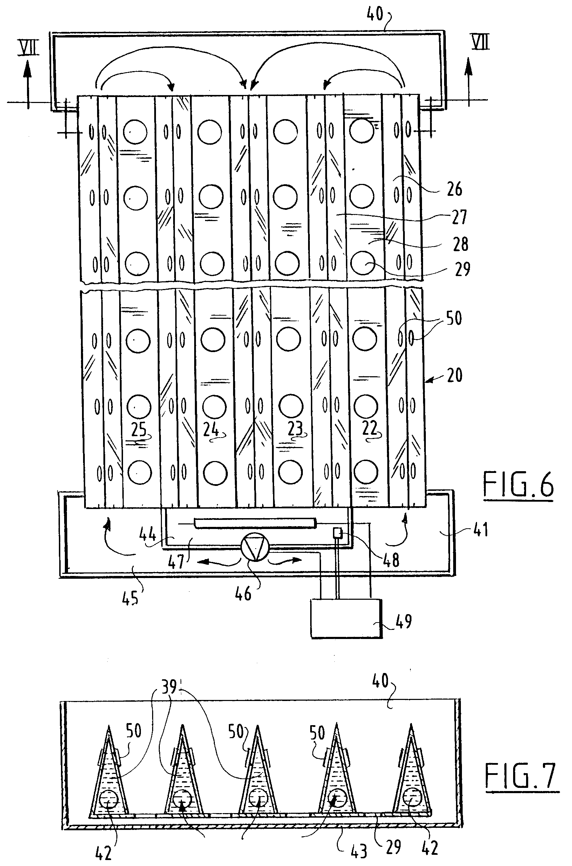

As shown in Fig. 3, a separate bottom plate 38 may be attached to lower tray member 20 to provide structural rigidity thereto. Plate 38 may be sealed to the bottom of tray member 20 such that individual water transmission channels 39 are provided in the enclosed triangualr regions thereby produced. Alternatively, water transmission channels could be provided by separate conduits extending through these triangular regions. A lower tray member 20 of this type provides the basis for a transplant plug heating system as shown in Figs. 6 and 7. In addition, an arrangement of water emitters 50, e.g. in the form of pinholes, can be provided in the side walls of bottom tray member 20 to deliver water to the individual cells in tray 15. Preferably the emitters are positioned where they are covered by the upper tray member to avoid clogging by the dirt in the individual cells.

In the embodiment shown in Figs. 6 and 7, headers 40 and 41 are mounted is a water tight manner on opposite ends of lower tray member 20. Individual access ports 42 and 43 communicate between headers 40 and 41 and water transmission channels 39.

It is also possible to have water channels between the bottom wall section of the lower and the upper tray, for supplying water to and deriving water from the plugs present in the cells.

A submersible electric heating coil 47, temperature probe 48 and control system 49 provide thermostatically controlled water temperature in header 41. While thermal induced currents in the headers 40, 41 and the water transmissions channels 39 may be employed to communicate the water warmed by heater coil 47 to all parts of the system, it is preferable to form header 41 with a first header compartment 44 and a second header compartment 44 to compartment 45 for forced water circulation through the system.

It should be apparent that there are many approaches that could be taken to integrating the apparatus of this invention into the operation of a large scale commercial transplant propagation operation.

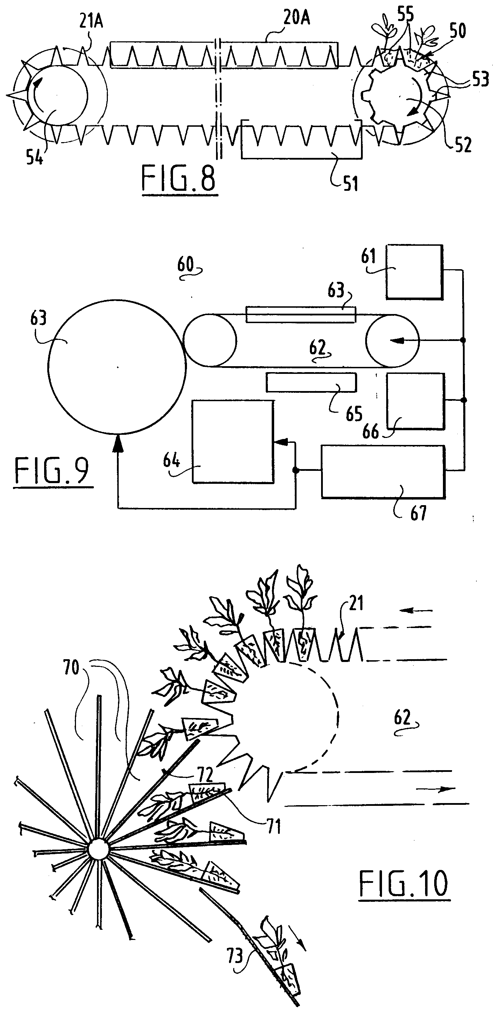

Fig. 8 illustrates an embodiment of this invention for use in large scale commercial seedling nurseries. A lower tray member 20A having similar structure to that shown in Fig. 3 is mounted in a fixed position. The channels of lower tray member 20A extend from left to right parallel to the plane of the paper and may be many feet long. Preferably lower tray member would be formed of heavy gauge structural plastic or sheet metal for strength and durability. Upper tray member 21A is made in the form of a continuous belt which is carried on guide rolls 52 and 54. It would preferably be formed from a strong flexible material such as rubber of vinyl. Guide roll 52 may have an arrangement of driving teeth 53 and be coupled to a drive motor (not shown).

Various machine stages for dispensing dirt, creating seed depressions, dropping seeds, and adding mulch may be mounted in operative relation to the travelling upper tray member 21A to automate these operations in a manner similar to current state of the art practice. After seedlings have grown to desired size, upper tray member 21A may be driven to bring each row of the transplant plugs 55 to a plug unloading station 50. On the underside, a tray cleaning station 51 may be provided for brushing and/or spraying residual dirt and debris from the lower tray belt.

Referring now to Figs. 9 and 10, an approach to interfacing the transplant tray apparatus of this invention into an overall automated plug planting system 60 will be described. A full tray loading module 61 carries a large number of upper tray members 21 and sequentially places them on a tray conveyor 62 which grips the upper tray members and carries them to a transfer point on the other end of the conveyor 62. An upper tray member guide 68 is located in a fixed position relative to the tray conveyor 62 to guide the individual plugs in the upper tray module as they slide along. This avoids any dislodging of the plugs as they are transported. Various approaches could be taken to gripping and conveying the upper tray members using various conveyor mechanisms.

A plug transfer module 63 accepts rows of plugs leaving the upper tray members as they are unloaded and transfers these plugs to a plug planting module 64. The emptied tray members may then be passed through a tray cleaning station 65, followed by unloading them in sequence from the belt using an empty tray unloading module 66. Overall operation of this system may utilize a system controller 67.

Fig. 10 illustrates one embodiment of a plug transfer module 63. Individual upper tray members 21 are carried on tray conveyor 62 around a guide roll so that the individual cells are spread at the top and rows of plugs will be dislodged from the upper tray member and dropped onto plug receiving fingers 71 in separate bins 70. A plug stop 72 holds the individual plugs in position on the fingers in each bin. Fingers 71 and bins 70 rotat synchronously with the transport of the upper tray member. Plugs are transfered from the point at which they are received to a plug delivery chute 73 leading to a plug planting module 64.

It will be appreciated that there are many alternative approaches that could be used for conveying the upper tray members and for transfering the plugs from an upper tray member to automated plug planting apparatus.

It should be apparent that lower tray member 20 and upper tray member 21 may be fashioned from a variety of materials using a number of different manufacturing processes. For example, lower tray member could be fashioned as a metal or plastic extrusion with apertures 29 die cut therein. Lower tray member could also be formed from a long roll of sheet metal by passing it through various die stages to fold the metal into the desired shape, followed by die punching of the apertures 29. Other useful manufacturing techniques would be plastic injection molding or plastic vacuum forming. The method selected would be tailored to the characteristics desired for the lower tray member, e.g. whether it is a long term use item or disposable.

Upper tray member 20 could be made using virtually any of the same processes as described above, but with a more delicate and complicated die cutting operation to remove the triangular shaped regions 39 from side wall sections and the square material from the bottom wall section. For large volume production, other more sophisticated methods, such as laser or electron beam machining could be used to cut out the shapes of upper tray member, especially if thin, vacuume formed plastic material is used for a disposable product.

Manufacture of the alternative embodiment shown in Figs. 11-13 will preferably involve some form of molding process for lower tray member 20A. A variety of metal or plastic forming methods could be used to produce upper tray member 21A.

Fig. 14 shows another type of apparatus which may be used for removing transplant plugs from individual trays.

This apparatus comprises a platform 75, which can be moved in a vertical direction by means of an actuater 76, for instance a hydraulic cylinder. Further two supporting walls 77, 78 have been provided on either side of the platform 75. Both supporting walls 77, 78 and the actuater 76 are connected with a basis 79.

Further a conveyor belt 80 has been provided for removing the plugs. This conveyor belt is wrapped around a number of rollers 81, of which at least one is driven by an electric motor not shown in the drawings. The heights of the conveyor belt 80 is such, that it is more or less the same as that of the bottom wall section of an upper tray member, the rims whereof are supported by the supporting walls 77, 78.

Further a pushing element 82 has been provided, connected with a carriage 83 by means of an actuater 84, which carriage is movable in a direction parallel to the conveyor belt 80 over a pair of guiding rails 85, 86. Of course a driving mechanism has been provided for making the carriage 83 move along the guiding rails 85, 86, for instance a linear actuator or an endless belt connected with an electric motor. However, no such apparatus has been indicated in the drawing.

When a combination of an upper tray member 21 and a lower tray member 20 is brought to the present unloading apparatus, the lower tray member 20 will rest on the platform 75, whereas the upper tray member 21 will rest on the supporting walls 77, 78 by means of its rims 87. Subsequently, the platform 75 is lowered, taking the lower tray member down. Subsequently, the carriage 83 is brought aligned with the first row of the upper tray member, so that the pushing element 82 can subsequently push out all plugs 89 present in the first row of the upper tray member. The plugs 89 are then further conveyed by means of the conveyor belt 80. Of course this apparatus can be modified; for instance equipment can be added for automatically supplying the trays according to the present invention and for removing said emptied trays.

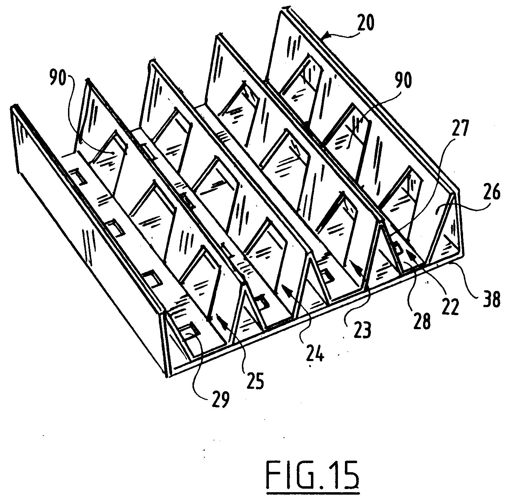

The embodiment of the lower tray member shown in fig. 15 differs only from the embodiment shown in fig. 3 by the provision of apertures 90 provided in the sloping vertical side walls of 26, 27. These apertures 90 are located such that, when the upper tray member 21 is nested in the lower tray member, the apertures are invisible from above, as they are covered by the sloping vertical walls of the upper tray member.

These apertures have the advantage that they substantially reduce the weight of the lower tray member and also the use of material thereof. Further the apertures co-operate to create four channels which may be used for different purposes.

While various embodiments of this invention have been described above, it should be apparent that numerous modifications could be made without departing from the scope of the invention as claimed in the following claims.

## Claims

1. Tray for holding a plurality of plant plugs comprising a lower tray member and an upper tray member carried on said lower tray member and cooperatively forming a regular array of transplant plug cells, said upper tray member being removable from said lower tray member to carry transplant plugs out of said array of cells.

2. Tray as claimed in claim 1, wherein said lower tray member comprises a transplant propagation tray itself defining a rectangular array of transplant plug cells, and the upper tray member comprises a plurality of separate parallel channels each having substantially vertical side wall sections and joining bottom wall sections with openings in the side and bottom wall sections adapted to allow the upper tray member to nest in the lower tray member and form portions of the side and bottom walls of the transplant plug cells.

3. Tray as claimed in claim 1, wherein said upper and lower tray members each comprises a plurality of parallel channels with each channel formed by a pair of opposite, substantially vertical side wall sections and a bottom wall section joining lower edges of the substantially vertical side wall sections, adjacent substantially vertical side wall sections of the tray members are joined together and form a substantially structural element; said channels in said lower and upper tray members being positioned transverse to each other when assembled together; said channels in the lower tray member being substantially continuous from end to end thereof; said substantially vertical side wall sections and bottom wall sections and said bottom wall section of said upper tray member being discontinuous from end to end and defining openings corresponding in geometrical shape to said structural element formed by substantially vertical side wall sections of said lower tray member such that said upper tray member nests on said lower tray member and sections of said substantially vertical side walls of each of said upper and lower tray members form the complete side walls of said array of plug cells.

4. Tray as claimed in claim 3, wherein said bottom wall section of the upper tray member may be positioned substantially adjacent to the bottom wall section of the lower tray when the tray members are assembled together and both of the bottom wall sections may have apertures defined therein at cooperative locations to form a drainage aperture in the bottom of each of the plug cells.

5. Tray as claimed in claim 3, wherein the bottom wall section of the upper tray member is positioned to such a distance from the bottom wall section of the lower tray member when said tray members are assembled together, and wherein a drainage opening has been provided in the bottom wall section of the upper tray member.

6. Tray as claimed in claim 3, wherein said structural member defined by said side walls of said lower tray member is a solid structural member to provide rigidity to said lower tray member.

7. Tray as claimed in claim 3, wherein a plurality of water transmission channels are formed between adjacent vertical side walls of said lower tray member and extend from one end of said lower tray member to the other.

8. Tray according to one of the preceeding claims, **characterized in** that the parallel channels each have the shape of a trapezium in cross section.

9. Tray according to one of the claims 2-8, **characterized** in that apertures have been provided in the substantially vertical side walls of the lower tray member such that, when the upper tray member is nested in the lower tray member, the apertures are invisible from above.

10. Tray according to one of the preceeding claims **characterized in** that the plug cells each have at their top a horizontal cross section of a circle and at their bottom they each have a horizontal cross section of a rectangle, and they have the side walls gradually change from one cross section to the other.

11. Propagation and planting apparatus comprising:
   - a plurality of transplant propagation trays according to one of the preceeding claims;
   - a tray conveyor module, including a tray conveyor for receiving a sequence of said upper tray members carrying mature transplant plugs and carrying each of said upper tray members to a plug transfer station, and plug removal means for removing said transplant plugs from said upper tray member one row at a time; and
   - a plug transfer module positioned at said plug transfer station and adapted to receive each row of transplant plugs at a plug transfer location and to carry each of said transplant plugs to a plug delivery location, said plug delivery location being readily interfaced to a plug planting module.

12. Apparatus as claim 11, wherein
   - said plug removal means comprises transport means carrying said upper tray member around a bending radius and thereby altering the spacing of an outer portion of the cell walls thereof and releasing each transplant plug in a row of cells to drop out of said cells;
   - said plug transfer module comprises a cage member rotating in synchronism with the travel of said upper tray member around said radius and having a plurality of plug reveiving finger elements radially extending from a central hub and adapted to catch each plug in each row as it drops form said cells and carry said plugs to a delivery location, and a plug delivery means adapted to reveive said transplant plugs at said delivery station for delivery to a plug planting module.

13. Apparatus as claimed in claim 11, further comprising:

   - a tray loading module positioned adjacent said tray conveyor for placing a sequence of upper tray modules loaded with transplant plugs onto said tray conveyor at a tray loading station; and
   - a tray member guide operatively positioned relative to said tray conveyor for guiding said upper tray modules as they are carried from said tray loading station to said plug transfer station.

14. Apparatus as claimed in claim 1, wherein said lower tray member is mounted in a stationary position and comprises a plurality of parallel channels with each channel formed by a pair of opposite, sloped vertical side wall sections and a bottom wall section joining lower edges of said vertical side wall sections, adjacent vertical side wall sections of said tray members being joined together and forming a substantially triangular structural element; said upper tray member comprises an endless flexible belt member carried on first and second guide rows mounted adjacent opposite ends of said channels in said lower tray member, said belt member having sloping vertical side wall sections and bottom wall sections cooperating with said side wall and bottom wall sections of said lower tray member to form said rectangualr array of transplant cells for growing transplant plugs; and drive means is provided for driving said endless flexible belt member to carry rows of said transplant plugs to one end of said lower tray member for unloading form said upper tray member.

EP 0 464 954 A2

FIG.1

FIG.2

FIG.5

FIG.4

FIG.3

8

FIG.6

FIG.7

FIG.8

FIG.9

FIG.10

FIG.11

FIG.12

FIG.13

FIG.14

FIG.15